# DEMANDE DE BREVET EUROPEEN

(11) **EP 1 338 504 A1**
(43) Date de publication de la demande: **27.08.2003**
(21) Numéro de dépôt: 03290396.5
(22) Date de dépôt: 18.02.2003
(51) Int. Cl.: B62M 25/04, B62K 23/04

(54) **Sélecteur de vitesse**

(30) Priorité: 20.02.2002 FR 0202124
(71) Demandeur: ETCETERA, 44400 Reze (FR)
(72) Inventeur: Rolland, Norbert, 44700 Orvault (FR)
(74) Mandataire: Fosse, Danièle

(57) **Abrégé**

L'invention concerne un sélecteur (1) de vitesse pour la commande d'un dérailleur (2) de pignons ou d'un dérailleur (3) de plateaux à partir d'un dispositif (4) de commande.

Ce sélecteur est caractérisé en ce que la ou les cames (5, 7) sont agencées pour ménager au moins deux pistes (6A, 6B) d'entraînement coopérant respectivement par contact notamment par friction ou engrènement avec deux treuils (9, 11) servant chacun à l'enroulement du câble (10, 12) de commande d'un dérailleur (2, 3), chaque treuil (9, 11) présentant au moins une piste (14) d'entraînement, de préférence continue, susceptible d'être mise en contact avec une portion (6C, 6D) de piste (6A, 6B) d'entraînement de la ou d'une came (5, 7) annulaire lors d'un déplacement angulaire et axial de la ou d'une came (5, 7).

Application : sélecteur de vitesses pour cycles.

## Description

La présente invention concerne un sélecteur de vitesse, notamment pour cycle, pour la commande d'un dérailleur arrière, dit dérailleur de pignons, ou d'un dérailleur avant, dit dérailleur de plateaux, à partir d'un dispositif de commande, tel qu'une poignée tournante ou des leviers montés sur guidon, chaque dérailleur étant associé à un moyen de rappel élastique, tel qu'un ressort.

La plupart des vélos sont aujourd'hui équipés de plusieurs plateaux, généralement au nombre de trois, et de plusieurs pignons, généralement compris entre 7 et 10. Les plateaux, ou respectivement les pignons, présentent un diamètre et par conséquent un nombre de dents différent d'un plateau ou respectivement d'un pignon à un autre pour permettre le choix de développements en fonction du couple plateau-pignon. Le plus grand développement qui demande le plus grand effort correspond au plus grand plateau et au plus petit pignon tandis que le plus petit développement qui demande le moindre effort correspond au plus petit plateau et au plus grand pignon. Entre ces deux développements extrêmes, l'utilisateur peut faire varier à volonté les développements.

Toutefois, il est apparu très rapidement que l'utilisateur non habitué à cette pluralité de développements pouvait parfois sélectionner des développements incompatibles avec une durée de vie importante de la mécanique. Ces développements sont notamment ceux qui engendrent un désalignement important de la chaîne tels que grand plateau/grand pignon. Par ailleurs, pour passer d'un développement à un autre sans fatigue, il est préférable de choisir une succession de développements qui provoque une augmentation ou respectivement une réduction progressive de l'effort de l'utilisateur. Or, l'utilisateur a des difficultés à gérer cette sélection de développements. Il est souvent obligé de regarder le positionnement de sa chaîne sur ses plateaux ou pignons pour opérer cette sélection. En outre, il oublie parfois que de passer d'un pignon de plus petit diamètre à un pignon de plus grand diamètre réduit l'effort à fournir pour une cadence identique de pédalage alors que c'est l'inverse pour les plateaux, ce qui l'amène à une erreur de sélection.

Pour éviter tous les inconvénients précités, des sélecteurs de vitesse ont été conçus. Ils ont pour vocation de supprimer les développements redondants, d'éviter des désalignements de chaîne trop importants et d'imposer une succession de développements correspondant à un chemin de vitesses prédéterminé. De tels sélecteurs sont notamment décrits dans les brevets européens EP-A-0.727.348, les demandes internationales WO 95/03208 et WO 91/15393. Ces sélecteurs permettent donc de déterminer une pluralité de couples pignon-plateau qui se succéderont de manière déterminée en fonction de l'actionnement d'un dispositif de commande situé au guidon. Ce dispositif de commande est généralement situé à, ou au voisinage, d'une extrémité d'un guidon et est de préférence constitué d'un organe rotatif, tel qu'une poignée tournante bien connue. Ces sélecteurs permettent d'agir, lors d'un changement de développement, soit uniquement sur un pignon, soit uniquement sur un plateau, soit simultanément sur un pignon et un plateau, de manière à opérer simultanément un changement de plateau et de pignon pour optimiser les variations d'effort entre deux développements successifs. Tous ces sélecteurs sont basés sur le même principe, à savoir l'utilisation de chemins de came sur une pièce rotative. Ces chemins de came peuvent recevoir les extrémités des câbles de commande des dérailleurs et sont, dans ce cas, ménagés dans un barillet comme l'illustre le brevet européen EP-A-0.727.348. Dans une variante plus particulièrement illustrée par la demande internationale WO 91/15393, les câbles de commande des dérailleurs sont reliés à des chariots munis d'ergots se logeant dans les chemins de came d'une pièce cylindrique, la rotation de la pièce cylindrique générant un déplacement des chariots et, par suite, une traction ou respectivement un lâcher des câbles de commande. Un principe analogue est retenu dans le brevet américain US-A-4.201.095. Cependant, toutes ces solutions à base d'un ou plusieurs chemin(s) de came ont pour inconvénient de générer un encombrement important de l'ensemble.

On connaît par ailleurs, à travers le document FR-A-2.563.174, une poignée de commande rotative entraînant angulairement en déplacement une came rotative susceptible de s'engrener avec deux treuils d'enroulement respectifs d'un câble, en l'occurrence un câble de frein et un câble d'accélérateur. Un tel dispositif est parfaitement applicable à un engin moteur. Toutefois, la transposition d'un tel dispositif à la commande de deux dérailleurs n'apparaît en aucun cas comme évidente car elle nécessiterait de permettre, au moyen d'une même came rotative, l'entraînement simultané en déplacement de deux treuils, ce qui constituerait un objectif contraire à celui recherché dans le document FR-A-2.563.174. En conséquence, ce document doit être considéré comme appartenant uniquement à l'arrière-plan technologique.

Un but de la présente invention est de proposer un sélecteur de vitesse d'un nouveau type dont la conception permet de réduire son encombrement sans toutefois nuire aux performances de ce dernier.

Un autre but de l'invention est de proposer un sélecteur de vitesse dont la conception autorise une amplification de la course de traction du câble ou une minimalisation de la course de lâcher du câble pour autoriser des tolérances de fabrication sans augmenter l'effort de commande et l'encombrement de l'ensemble.

A cet effet, l'invention a pour objet un sélecteur de vitesse, notamment pour cycle, pour la commande d'un dérailleur arrière, dit dérailleur de pignons, ou d'un dérailleur avant, dit dérailleur de plateaux, à partir d'un dispositif de commande, tel qu'une poignée tournante ou des leviers montés sur guidon, chaque dérailleur étant associé à un moyen de rappel élastique tel qu'un ressort, ce sélecteur comportant, logé à l'intérieur d'un boîtier, au moins une came annulaire rotative, caractérisé en ce que la ou les cames sont agencées pour ménager au moins deux pistes d'entraînement coopérant respectivement par contact notamment par friction ou engrènement avec deux treuils servant chacun à l'enroulement du câble de commande d'un dérailleur, chaque treuil présentant au moins une piste d'entraînement, de préférence continue, susceptible d'être mise en contact avec une portion de piste d'entraînement de la ou d'une came annulaire lors d'un déplacement angulaire et axial de la ou d'une came, le déplacement angulaire de la ou des came(s) étant commandé par le dispositif de commande tandis que le déplacement axial de la ou d'une came, dans le sens d'un rapprochement de la piste d'entraînement de la came d'au moins un treuil, est commandé par coopération de bossages portés respectivement par la came et le boîtier, la ou les came(s) étant sollicitée(s) en permanence par un ressort de compression tendant à écarter la ou les came(s) des treuils.

L'invention sera bien comprise à la lecture de la description suivante d'exemples de réalisation, en référence aux dessins annexés dans lesquels :
la figure 1 représente une vue partielle en perspective d'un sélecteur de vitesse conforme à l'invention en position enlevée du boîtier ;
la figure 2 représente une vue partielle en perspective du boîtier du sélecteur de la figure 1 ;
les figures 3A à 3C représentent des vues schématiques illustrant une traction de câble par action sur un treuil du sélecteur ;
les figures 4A à 4C représentent, de manière schématique, un lâcher de câble obtenu par action sur le treuil d'un sélecteur et
la figure 5 représente, de manière schématique, une vue partielle d'un sélecteur équipé d'un dispositif de commande à leviers.

Le sélecteur 1 de vitesse, objet de l'invention, est plus particulièrement destiné à s'appliquer aux cycles non moteurs ou vélos. Toutefois, il peut, de manière similaire, s'appliquer à toute transmission comprenant un arbre menant équipé d'au moins deux plateaux et d'un dérailleur et d'un arbre mené équipé d'au moins deux pignons et d'un dérailleur. Ce sélecteur 1 de vitesse est destiné à permettre la commande du dérailleur 2 arrière dit dérailleur de pignons ou du dérailleur 3 avant dit dérailleur de plateaux à partir d'un dispositif 4 de commande, tel qu'une poignée tournante ou des leviers montés sur guidon.

Les dérailleurs avant 3 et arrière 2 peuvent être des dérailleurs connus. Ainsi, le dérailleur 3 avant peut être constitué d'une chape mobile suivant un axe sensiblement parallèle à l'axe du pédalier, cette chape ayant pour fonction de guider la chaîne pour son passage d'un plateau à un autre. Le dérailleur 2 arrière est, quant à lui, généralement constitué d'une roulette mobile latéralement qui pousse la chaîne sur son brin détendu pour permettre le passage de la chaîne d'un pignon à un autre.

Ces dérailleurs 2, 3 sont respectivement associés à un moyen de rappel élastique, tel qu'un ressort, destiné à agir sur le câble de commande du dérailleur. Ainsi, dans les exemples représentés, le câble de commande du dérailleur 2 arrière est représenté en 10 tandis que le câble de commande du dérailleur 3 avant est représenté en 12. Ces câbles 10, 12 de commande d'un dérailleur 2, 3 sont destinés à venir s'enrouler à l'intérieur d'une gorge 13 ménagée sur un treuil 9, 11 du sélecteur 1. Ces treuils 9, 11 sont logés à l'intérieur d'un boîtier 23 disposé au voisinage d'une extrémité du guidon du cycle. Ce boîtier 23 loge encore au moins une came 5 annulaire rotative comportant au moins une, de préférence deux pistes 6A, 6B d'entraînement. Ces deux pistes 6A, 6B d'entraînement, généralement étagées, coopèrent respectivement par contact notamment par friction ou par engrènement avec les treuils 9, 11. En particulier, chaque treuil 9, 11 présente au moins une piste 14 d'entraînement continue susceptible d'être mise en contact avec une portion 6C, 6D, dite portion active, de la piste 6A, 6B d'entraînement de la came 5 annulaire lors d'un déplacement angulaire et axial de la came 5. Le déplacement angulaire de la came 5 est commandé par le dispositif 4 de commande, à savoir poignée tournante ou levier, tandis que le déplacement axial de la came 5, dans le sens d'un rapprochement de la piste 6A, 6B d'entraînement de la came 5 d'au moins un treuil 9, 11, est commandé par coopération de bossages 18, 19 portés respectivement par la came 5 et le boîtier. La came 5 est par ailleurs sollicitée en permanence par un ressort 21 de compression tendant à écarter la came 5 des treuils 9, 11.

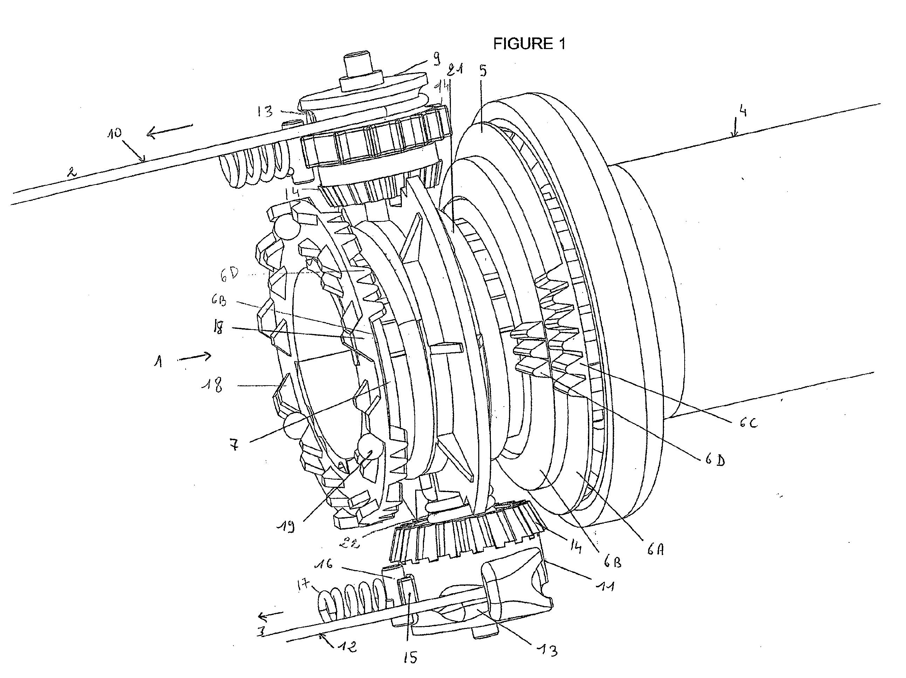

Ainsi, dans l'exemple représenté à la figure 1, le sélecteur 1 de vitesse comporte deux cames 5, 7 annulaires rotatives coaxiales, ces cames 5, 7 étant déplaçables angulairement autour d'un axe non représenté. Chaque came 5, 7 comporte au moins une piste 6B d'entraînement présentant des portions 6D, dites actives, coopérant par friction avec un treuil 9 servant à l'enroulement du câble 10 de commande d'un dérailleur 2 arrière. Ces cames 5, 7, sont sollicitées en permanence, dans le sens d'un écartement par un ressort 21, positionné entre lesdites cames et disposé sous forme d'un ressort hélicoïdal coaxial à l'axe de rotation des cames. Ces cames 5, 7 sont par ailleurs déplaçables angulairement en synchronisme par le dispositif 4 de commande. A cet effet, les came 5, 7 sont constituées de plateau prolongé à chaque fois par un manchon, lesdits manchons venant s'emboîter l'un dans l'autre pour provoquer un déplacement en synchronisme des cames 5 et 7. Dans une variante de réalisation, les cames 5, 7 sont montées libres en translation et solidaires en rotation d'un axe commun entraîné en rotation par le dispositif 4 de commande. Chaque came 5, 7 comporte, sur sa face opposée à celle présentant les portions 6C, 6D actives des pistes d'entraînement 6A, 6B, des bossages 18 susceptibles de coopérer avec des bossages 19 portés par le boîtier 23. Ces bossages 18, 19 sont agencés pour provoquer, à chaque changement de rapport commandé au moyen du dispositif 4 de commande, le déplacement axial de l'une ou l'autre des cames 5, 7 et par suite sa coopération avec le treuil 9 et/ou le treuil 11. De manière encore plus particulière, ce sélecteur 1 de vitesse comporte une première came 5 présentant au moins deux pistes 6A et 6B d'entraînement étagées présentant respectivement des portions 6C, 6D actives coopérant respectivement par contact, de préférence par friction ou par engrènement, l'une 6A avec le treuil 11 avant servant à l'enroulement du câble 12 de commande du dérailleur 3 de plateaux, l'autre 6B avec le treuil 9 arrière servant à l'enroulement du câble 10 de commande du dérailleur 2 de pignons. La seconde came 7 comporte quant à elle une piste 6B d'entraînement présentant des portions 6D actives coopérant par contact notamment par friction ou par engrènement avec le treuil 9 arrière. En conséquence, la came 5 permet un changement de plateaux ou un changement simultané d'un plateau et d'un pignon tandis que la came 7 permet uniquement un changement de pignons. Ces cames, qui se présentent sous forme de deux plateaux annulaires rotatifs, sont disposées en regard et sont séparées l'une de l'autre par un ressort 21 de compression rappelant lesdites cames en position écartée l'une de l'autre.

Dans une variante de réalisation non représentée, le sélecteur 1 de vitesse comporte au moins deux cames 5, 7 annulaires rotatives coaxiales, chaque came 5, 7 comportant une piste 6A, 6B d'entraînement présentant des portions 6C, 6D, dites actives, coopérant par contact notamment par friction ou par engrènement avec un treuil 9, 10 servant à l'enroulement du câble 10, 12 de commande d'un dérailleur 2, 3, lesdites cames 5, 7, sollicitées en permanence par un ressort 21 dans le sens d'un écartement, étant déplaçables angulairement en synchronisme par le dispositif 4 de commande, chaque came 5, 7 comportant des bossages 18 susceptibles de coopérer avec des bossages 19 portés par le boîtier, lesdits bossages 18, 19 étant agencés pour provoquer, à chaque changement de rapport commandé au moyen du dispositif 4 de commande, le déplacement axial de l'une ou l'autre des cames 5, 7.

Cette solution est toutefois moins intéressante car elle ne permet pas un changement simultané d'un plateau et d'un pignon.

Dans une autre variante de réalisation non représentée, le sélecteur 1 de vitesse comporte une came 5 unique munie de deux pistes d'entraînement étagées.

Comme mentionné ci-dessus, la ou chaque piste 6A, 6B d'entraînement de chaque came 5, 7 est constituée de portions actives et de portions inactives séparant lesdites portions actives. Les portions 6C, 6D actives sont constituées de parties saillantes de la piste. Ces portions saillantes peuvent présenter une surface lisse ou dentée comme l'illustrent les figures pour coopérer par contact de friction ou par engrènement avec les pistes d'entraînement des treuils 9, 10.

Chaque treuil 9, 11 comporte quant à lui une pluralité de positions angulaires prédéterminées correspondant chacune à un positionnement du dérailleur sur un plateau ou sur un pignon. Ces treuils, rappelés dans l'une quelconque des positions angulaires prédéterminées sous l'action d'un ressort associé au dérailleur 2,3, sont immobilisés dans l'une quelconque desdites positions angulaires par un organe d'arrêt 16 inactivé lors d'un contact par friction ou par engrènement du treuil 9, 11 avec une portion 6C, 6D active d'une piste 6A, 6B d'entraînement d'une came 5, 7. En d'autres termes, dès qu'une portion 6C ou 6D active de la piste d'entraînement 6A ou 6B d'une came 5 ou 7 entre en contact de friction avec la piste 14 d'entraînement de l'un des treuils 9, 11, ce treuil est entraîné en déplacement en direction d'une position angulaire suivante et est immobilisé dans cette nouvelle position angulaire par l'action de l'organe d'arrêt 16, cette immobilisation étant possible dès la cessation du contact entre portion active de piste d'entraînement de la came et piste d'entraînement du treuil notamment par coopération avec le ressort de rappel du dérailleur. On note que le treuil 11 avant comporte autant de positions angulaires que de plateaux tandis que le treuil 9 arrière comporte autant de positions angulaires que de pignons. De manière plus détaillée, chaque treuil 9, 11 affecte la forme d'un tambour muni sur sa périphérie d'une part d'au moins une piste 14 d'entraînement continue, d'autre part d'une gorge 13 d'enroulement d'un câble 10, 12 de commande d'un dérailleur 2, 3, ce tambour présentant sur son pourtour une pluralité de butées 15, chaque butée 15 correspondant à une position angulaire prédéterminée du treuil 9, 11 immobilisé dans ladite position par un organe d'arrêt 16 sollicité par ressort 17.

On note également que le treuil 11 avant d'enroulement du câble 12 de commande du dérailleur 3 à plateaux est muni intérieurement d'un ressort 22 de torsion d'action antagoniste au ressort du dérailleur 3 pour limiter l'effort à appliquer sur le dispositif 4 de commande par l'opérateur.

On comprend ainsi, grâce à la description qui précède, que, lors d'une action sur le dispositif 4 de commande, on provoque un déplacement angulaire de la came 5 ou des cames 5 et 7 parallèlement à un déplacement axial de ces dites cames, ce déplacement axial étant obtenu par coopération de bossages 18 portés sur la face des cames opposées à celles présentant les portions 6C, 6D actives des pistes d'entraînement avec des bossages 19 complémentaires portés par le boîtier. Ce déplacement axial permet un rapprochement et une coopération par friction des pistes d'entraînement d'une came avec la piste d'entraînement continue des treuils 9 et/ou 11 et par suite une action sur le câble de commande du ou des dérailleurs dans le sens d'un lâcher de câble ou d'une traction sur ce câble de manière à agir sur le dérailleur avant ou le dérailleur arrière pour provoquer le changement d'un plateau ou d'un pignon. On note que, dans les exemples représentés, les pistes d'entraînement des treuils sont dentées.

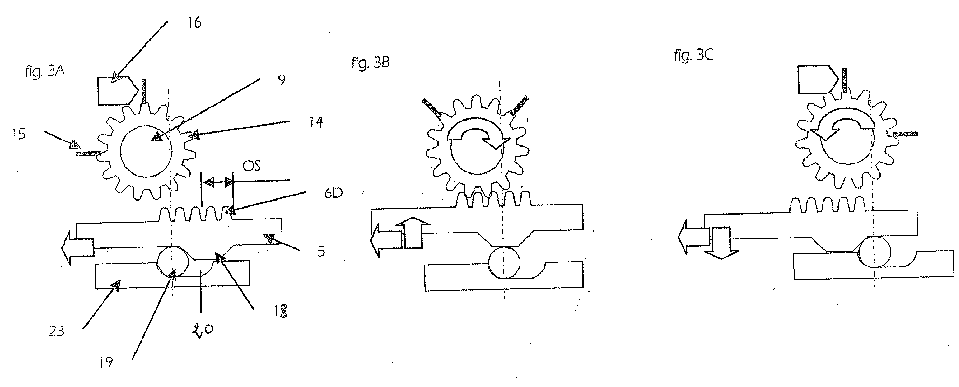

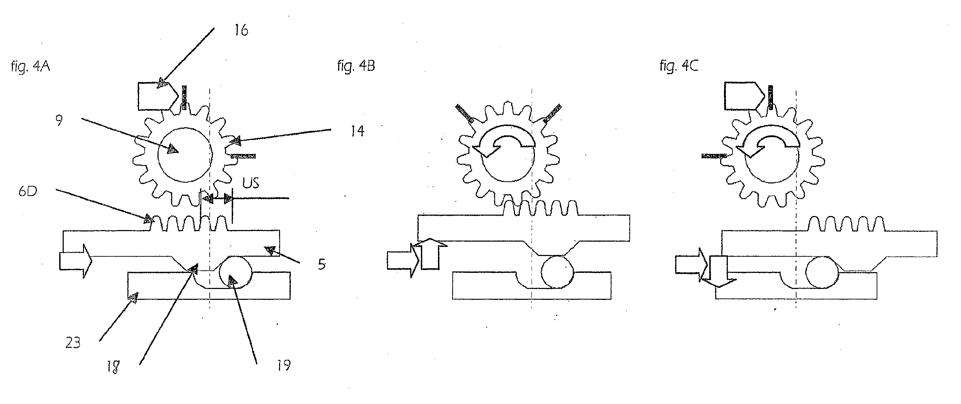

Toutefois, il est nécessaire, pour rattraper tous les jeux de fonctionnement et l'imprécision des assemblages, d'amplifier tous les mouvements des câbles de commande. On constate en effet par exemple au cours du temps un allongement du câble du fait de son usure. En conséquence, dans le cas d'une traction de câble, si la course de câble nécessaire à un changement par exemple d'un pignon ou d'un plateau est de 3 mm, le câble exécutera une course de 4 mm avant d'être relâché. Le ressort du dérailleur permettra alors de repositionner le treuil dans une position angulaire prédéterminée une fois les cames rotatives écartées du treuil. A l'inverse, dans le cas d'un lâcher de câble, on fait exécuter au câble une course de 2 mm pour obtenir une course finale de 3 mm. A nouveau, c'est l'action du moyen de rappel ou ressort du dérailleur qui permet d'obtenir cette course finale de 3 mm. En d'autres termes, le treuil sera entraîné en déplacement par la came pour ne dérouler le câble que sur une course de 2 mm, le troisième millimètre étant obtenu par l'action du moyen de rappel du dérailleur sur le câble. A nouveau, le treuil pourra être immobilisé dans la position angulaire correspondante. Ces deux phénomènes appelés under shifting (US) et over shifting (OS) peuvent être obtenus au moyen d'une coopération des bossages 18, 19 conformes à ceux représentés aux figures. En effet, comme l'illustrent les figures 3A à 3C et 4A à 4C, chaque bossage 19 porté par le boîtier est constitué d'une butée susceptible d'être entraînée en déplacement entre deux positions extrêmes lors d'un déplacement angulaire d'une came 5, 7. Chaque position extrême correspond à une position de coopération de la butée 19 avec un bossage 18 complémentaire d'une came 5, 7 en vue de provoquer, lors de la poursuite du déplacement angulaire de la came 5, 7, un déplacement axial de cette dernière. Les positions extrêmes sont sélectivement activables en fonction du sens de rotation de la came 5, 7 de manière à provoquer, dans un premier sens de rotation, une traction d'un câble de commande de dérailleur et dans le sens inverse, un lâcher de câble de commande de dérailleur. Les valeurs de traction et de relâchement du câble sont fonctions du profil des bossages 18, 19 et des portions 6C, 6D actives des pistes 6A, 6B d'entraînement des cames 5, 7.

Dans un premier mode de réalisation non représenté, les bossages 19 portés par le boîtier 23 peuvent être constitués de butées disposées sur une pièce mobile, telle qu'une rondelle, déplaçable angulairement autour d'un axe correspondant à l'axe de rotation des cames 5, 7.

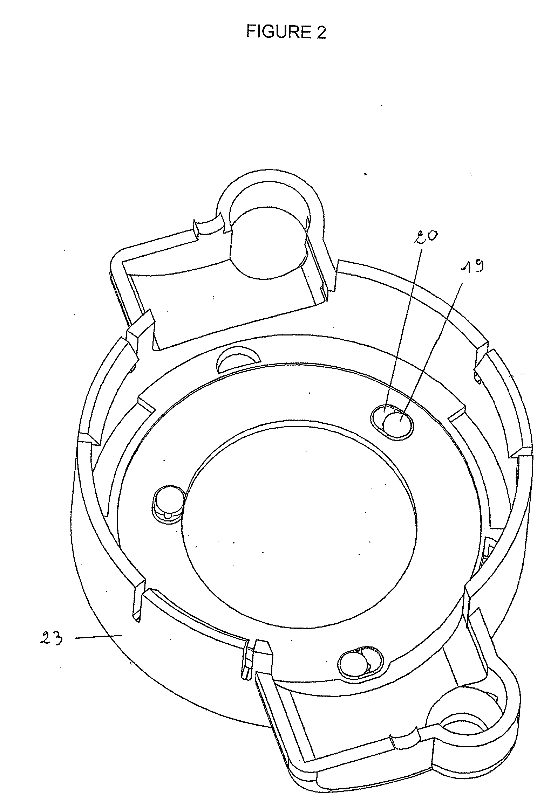

Dans un autre mode de réalisation représenté à la figure 2, les bossages 19 portés par le boîtier 23 sont constitués de billes disposées avec jeu à l'intérieur de logements 20 du boîtier 23, lesdits logements étant répartis autour d'un axe confondu avec l'axe de rotation des cames 5, 7.

Pour parfaire cette coopération, la ou chaque came 5, 7 comporte des bossages 18 disposés sur trois cercles de diamètre différent, un bossage de chaque cercle étant actif lors d'une coopération avec les bossages 19 portés par le boîtier, les bossages 18 actifs étant distants de 120° de manière à obtenir des appuis optimisés entre lesdits bossages.

Le détail des figures 3A à 3C et 4A à 4C va désormais être explicité. Lors d'un déplacement angulaire de la came 5 suivant une direction correspondant à la flèche de la figure 3A, la came 5 provoque, au cours de son déplacement angulaire, un déplacement de la butée 19 jusqu'à une position extrême correspondant à celle représentée à la figure 3A par coopération du bossage 18 de la came 5 dans le sens d'un rapprochement du treuil 9 avec cette butée 19. Lors de la poursuite du déplacement angulaire de la came 5, au-delà de cette position extrême de la butée 19, on constate un déplacement axial de la came 5 suite à la coopération des bossages 18 et 19, déplacement axial qui engendre un entraînement en rotation du treuil 9 dans le sens représenté à la figure 3B. Cet entraînement en rotation est obtenu par contact par engrènement de la portion active 6D de la piste d'entraînement de la came 5 avec la piste d'entraînement du treuil 9. Cet entraînement en rotation est poursuivi jusqu'à déplacement axial de la came 5 dans le sens d'un éloignement du treuil suite à la fin de la coopération des bossages 19 et 18 comme l'illustre la figure 3C. Au cours de ce déplacement angulaire, le treuil 9 a donc été déplacé angulairement d'une distance correspondant sensiblement à la longueur de la portion active 6D de la piste d'entraînement de la came 5. Sur cette portion 6D, la portion représentée par OS à la figure 3A correspondant à la portion de traction de câble supérieure à celle qui était nécessaire pour obtenir un changement de pignon. La valeur de traction du câble est donc supérieure à celle qui était nécessaire. Toutefois, le ressort associé au dérailleur 2 arrière permet un repositionnement du treuil 9 dans une position angulaire correspondant à la course de câble qui était voulue. A cet effet, le ressort associé au dérailleur arrière entraîne le treuil 9 dans un sens de rotation opposé à celui représenté à la figure 3B jusqu'à amener ce treuil 9 dans une position angulaire prédéterminée dans laquelle ce treuil est immobilisé par l'action de l'organe d'arrêt 16. Cette immobilisation est rendue possible du fait de l'absence de coopération entre piste d'entraînement du treuil et piste d'entraînement de la came.

A l'inverse, pour l'obtention d'un lâcher de câble, on procède de la manière suivante : la came 5 est déplacée angulairement dans un sens correspondant à celui représenté à la figure 4A. Le bossage 18 de la came 5 entraîne, au cours du déplacement angulaire de la came 5, la butée 19 jusqu'à sa position extrême correspondant à celle représentée à la figure 4A. La poursuite du déplacement angulaire de la came 5 dans le sens représenté à la figure 4B engendre un déplacement axial de la came 5 en direction du treuil 9 et par suite une coopération de la portion active 6D de la piste d'entraînement de la came 5 avec la piste d'entraînement du treuil 9 et l'entraînement en rotation du treuil 9 dans un sens conforme à celui représenté à la figure 4B, ce sens de rotation étant inverse à celui représenté à la figure 3B. Ce déplacement angulaire du treuil se poursuit jusqu'à la fin de la coopération entre bossage 18 et bossage 19. Cette fin de coopération se traduit par un déplacement axial de la came 5 dans le sens d'un écartement du treuil 9. On note que dans ce cas, la portion US représentée par une double flèche à la figure 4A correspond à la fraction de la portion active 6D de la piste d'entraînement 5 qui ne génère aucune action sur le treuil 9. En effet, lorsque cette portion pourrait être mise en contact avec le treuil 9, les bossages 18 et 19 ne coopèrent pas encore de telle sorte qu'il n'existe pas de contact par friction ou par engrènement entre la portion 6D de la piste 14 d'entraînement et la piste d'entraînement du treuil 9. Il en résulte un entraînement en rotation du treuil 9 sur une valeur angulaire plus faible que celle qui est nécessaire à la course de lâcher de câble pour provoquer un changement de pignons. La poursuite de l'entraînement en rotation du treuil 9 dans le sens d'un lâcher de câble est obtenue à nouveau par l'action du ressort de rappel associé au dérailleur qui dans ce cas va poursuivre l'entraînement en rotation du treuil 9 jusqu'à une position angulaire prédéterminée dans laquelle le treuil est immobilisé par l'intermédiaire de l'organe d'arrêt 16. A nouveau, cet organe d'arrêt 16 est actif puisque came et treuil ne coopèrent plus entre eux par contact par friction ou par engrènement. Cette disposition particulière des bossages de la came et des bossages complémentaires portés par le boîtier permet donc d'obtenir des valeurs de lâcher de câble ou de traction de câble quelconque qui permettent de rattraper tous les jeux de fonctionnement du système.

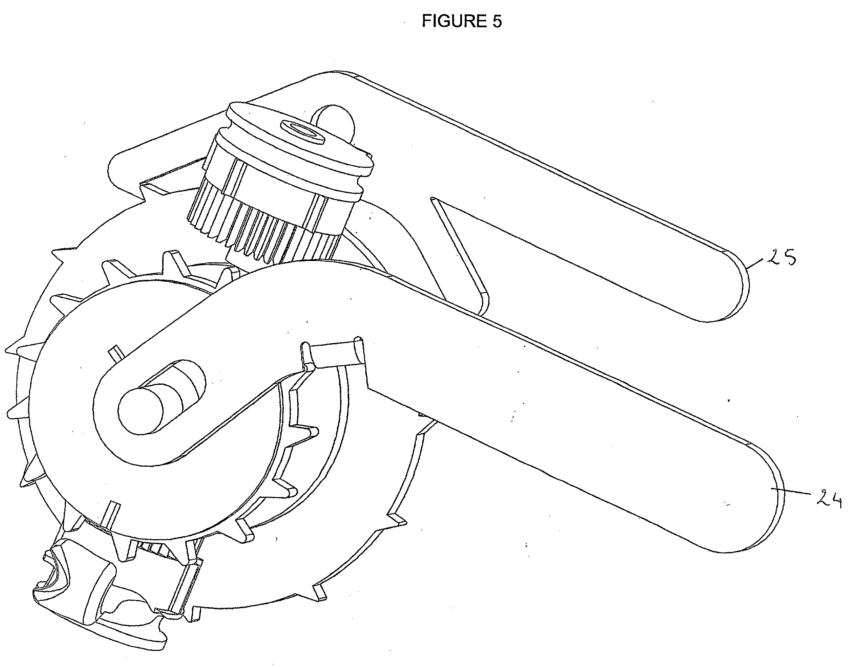

Comme mentionné ci-dessus, le déplacement angulaire dans un sens ou dans l'autre de la ou des cames annulaires 5, 7 est commandé par le dispositif 4 de commande. Dans l'exemple représenté à la figure 1, ce dispositif de commande est constitué d'une poignée tournante entraînant en rotation lesdites cames. Dans l'exemple représenté à la figure 5, ce dispositif de commande est constitué par deux leviers 24, 25. Dans ce cas, chaque came 5, 7 est équipée à sa périphérie d'une portion dentée destinée à venir en prise avec au moins un crochet complémentaire d'un levier 24, 25. Ainsi, le levier 24 de descente est associé à la came 7 comportant une seule piste d'entraînement tandis que le levier 25 de montée, qui comporte deux crochets, est associé à la came 5 comportant deux pistes d'entraînement. Cette came 5 est équipée d'un ressort moteur entraînant en rotation ladite came toujours dans le même sens. Chaque levier joue tour à tour le rôle d'organe de blocage d'entraînement en rotation des roues et d'organe d'entraînement en rotation des roues. Ce principe de fonctionnement des leviers est bien connu et est appelé par les hommes du métier principe dit de la roue à rochet.

Bien évidemment, tout autre dispositif de commande présentant l'avantage de pouvoir entraîner en rotation les cames aurait également pu être retenu.

## Revendications

1. Sélecteur (1) de vitesse, notamment pour cycle, pour la commande d'un dérailleur (2) arrière, dit dérailleur de pignons, ou d'un dérailleur (3) avant, dit dérailleur de plateaux, à partir d'un dispositif (4) de commande, tel qu'une poignée tournante ou des leviers montés sur guidon, chaque dérailleur (2, 3) étant associé à un moyen de rappel élastique tel qu'un ressort, ce sélecteur comportant, logé à l'intérieur d'un boîtier (23), au moins une came (5) annulaire rotative,
**caractérisé en ce que** la ou les cames (5, 7) sont agencées pour ménager au moins deux pistes (6A, 6B) d'entraînement coopérant respectivement par contact notamment par friction ou engrènement avec deux treuils (9, 11) servant chacun à l'enroulement du câble (10, 12) de commande d'un dérailleur (2, 3), chaque treuil (9, 11) présentant au moins une piste (14) d'entraînement, de préférence continue, susceptible d'être mise en contact avec une portion (6C, 6D) de piste (6A, 6B) d'entraînement de la ou d'une came (5, 7) annulaire lors d'un déplacement angulaire et axial de la ou d'une came (5, 7), le déplacement angulaire de la ou des came(s) (5, 7) étant commandé par le dispositif (4) de commande tandis que le déplacement axial de la ou d'une came (5, 7), dans le sens d'un rapprochement de la piste (6A, 6B) d'entraînement de la came (5, 7) d'au moins un treuil (9, 11), est commandé par coopération de bossages (18, 19) portés respectivement par la came et le boîtier, la ou les came (s) (5, 7) étant sollicitée(s) en permanence par un ressort (21) de compression tendant à écarter la ou les came(s) (5, 7) des treuils (9, 11).

2. Sélecteur (1) de vitesse selon la revendication 1,
**caractérisé en ce qu'**il comporte au moins deux cames (5, 7) annulaires rotatives coaxiales, chaque came (5, 7) comportant une piste (6A, 6B) d'entraînement présentant des portions (6C, 6D), dites actives, coopérant par contact notamment par friction ou par engrènement avec un treuil (9, 10) servant à l'enroulement du câble (10, 12) de commande d'un dérailleur (2, 3), lesdites cames (5, 7), sollicitées en permanence par un ressort (21) dans le sens d'un écartement, étant déplaçables angulairement en synchronisme par le dispositif (4) de commande, chaque came (5, 7) comportant des bossages (18) susceptibles de coopérer avec des bossages (19) portés par le boîtier, lesdits bossages (18, 19) étant agencés pour provoquer, à chaque changement de rapport commandé au moyen du dispositif (4) de commande, le déplacement axial de l'une ou l'autre des cames (5, 7).

3. Sélecteur (1) de vitesse selon la revendication 2,
**caractérisé en ce qu'**il comporte une première came (5) présentant au moins deux pistes (6A, 6B) d'entraînement généralement étagées présentant chacune des portions (6C, 6D) actives coopérant respectivement par contact notamment par friction ou par engrènement, l'une (6A) avec le treuil (11) avant servant à l'enroulement du câble (12) de commande du dérailleur (3) de plateaux, l'autre (6B) avec le treuil (9) arrière servant à l'enroulement du câble (10) de commande du dérailleur (2) de pignons, et une seconde came (7) comportant une piste (6B) d'entraînement présentant des portions (6D) actives coopérant par contact notamment par friction ou par engrènement avec le treuil (9) arrière.

4. Sélecteur (1) de vitesse selon l'une des revendications 1 à 3,
**caractérisé en ce que** la ou chaque came (5, 7) comporte des bossages (18) disposés sur trois cercles de diamètre différent, un bossage de chaque cercle étant actif lors d'une coopération avec les bossages (19) portés par le boîtier, lesdits bossages (18) actifs étant distants de 120°.

5. Sélecteur (1) de vitesse selon l'une des revendications 1 à 4,
**caractérisé en ce que** chaque bossage (19) porté par le boîtier est constitué d'une butée susceptible d'être entraînée en déplacement entre deux positions extrêmes lors d'un déplacement angulaire d'une came (5, 7), chaque position extrême correspondant à une position de coopération de la butée (19) avec un bossage (18) complémentaire d'une came (5, 7) en vue de provoquer, lors de la poursuite du déplacement angulaire de la came (5, 7), un déplacement axial de cette dernière, lesdites positions extrêmes étant sélectivement activables en fonction du sens de rotation de la came (5, 7) de manière à provoquer, dans un premier sens de rotation, une traction d'un câble de commande de dérailleur et dans le sens inverse, un lâcher de câble de commande de dérailleur, les valeurs de traction et de relâchement du câble étant fonctions du profil de bossages (18, 19) et des portions (6C, 6D) actives des pistes (6A, 6B) d'entraînement des cames (5, 7).

6. Sélecteur (1) de vitesse selon la revendication 5,
**caractérisé en ce que** les bossages portés par le boîtier (23) sont constitués de butées disposées sur une pièce mobile, telle qu'une rondelle, déplaçable angulairement autour d'un axe correspondant à l'axe de rotation des cames (5, 7).

7. Sélecteur (1) de vitesse selon la revendication 5,
**caractérisé en ce que** les bossages (19) portés par le boîtier (23) sont constitués de billes disposées avec jeu à l'intérieur de logements (20) du boîtier (23), lesdits logements étant répartis autour d'un axe confondu avec l'axe de rotation des cames (5, 7).

8. Sélecteur (1) de vitesse selon l'une des revendications 1 à 7,
**caractérisé en ce que** la ou chaque piste (6A, 6B) d'entraînement de chaque came (5, 7) est constituée de portions actives et de portions inactives, les portions (6C, 6D) actives étant constituées de parties saillantes de la piste.

9. Sélecteur (1) de vitesse selon l'une des revendications 1 à 8,
**caractérisé en ce que** chaque treuil (9, 11) comporte une pluralité de positions angulaires prédéterminées correspondant chacune à un positionnement du dérailleur sur un plateau ou sur un pignon, lesdits treuils (9, 11), rappelés dans l'une quelconque des positions angulaires prédéterminées sous l'action d'un ressort associé au dérailleur (2, 3), étant immobilisés dans l'une quelconque desdites positions angulaires par un organe d'arrêt (16) inactivé lors d'un contact par friction ou par engrènement du treuil (9, 11) avec une portion (6C, 6D) active d'une piste (6A, 6B) d'entraînement d'une came (5, 7).

10. Sélecteur (1) de vitesse selon la revendication 9,
**caractérisé en ce que** le treuil (11) avant comporte autant de positions angulaires que de plateaux tandis que le treuil (9) arrière comporte autant de positions angulaires que de pignons.

11. Sélecteur (1) de vitesse selon l'une des revendications 1 à 10,
**caractérisé en ce que** chaque treuil (9, 11) affecte la forme d'un tambour muni sur sa périphérie d'une part d'au moins une piste (14) d'entraînement continue, d'autre part d'une gorge (13) d'enroulement d'un câble (10, 12) de commande d'un dérailleur (2, 3), ce tambour présentant sur son pourtour une pluralité de butées (15), chaque butée (15) correspondant à une position angulaire prédéterminée du treuil (9, 11) immobilisé dans ladite position par un organe d'arrêt (16) sollicité par ressort (17).

12. Sélecteur (1) de vitesse selon l'une des revendications 1 à 11,
**caractérisé en ce que** le treuil (11) avant d'enroulement du câble (12) de commande du dérailleur (3) à plateaux est muni intérieurement d'un ressort (22) de torsion d'action antagoniste au ressort du dérailleur (3) pour limiter l'effort à appliquer sur le dispositif (4) de commande par l'opérateur.
